Europäisches Patentamt

European Patent Office

Office européen des brevets

(11) Numéro de publication : **0 023 861**
**B1**

(12) # FASCICULE DE BREVET EUROPÉEN

(45) Date de publication du fascicule du brevet :
**01.06.83**

(51) Int. Cl.³ : **G 01 C 21/22**

(21) Numéro de dépôt : **80401113.8**

(22) Date de dépôt : **25.07.80**

(54) **Dispositif indicateur cartographique, notamment pour un indicateur de navigation aérienne.**

(30) Priorité : **07.08.79 FR 7920229**

(43) Date de publication de la demande :
**11.02.81 Bulletin 81/06**

(45) Mention de la délivrance du brevet :
**01.06.83 Bulletin 83/22**

(84) Etats contractants désignés :
**DE GB NL SE**

(56) Documents cités :
**FR A 2 357 022**
**US A 4 007 327**

(73) Titulaire : **THOMSON-CSF**
**173, Boulevard Haussmann**
**F-75379 Paris Cedex 08 (FR)**

(72) Inventeur : **Reymond, Jean-Claude**
**THOMSON-CSF SCPI 173, Bld Haussmann**
**F-75360 Paris Cedex 08 (FR)**
Inventeur : **Gontier, Maurice**
**THOMSON-CSF SCPI 173, Bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Dispositif indicateur cartographique, notamment pour un indicateur de navigation aérienne

La présente invention concerne des perfectionnements aux dispositifs indicateurs cartographiques dans lesquels une carte géographique est préalablement enregistrée sur un support optique, magnétique ou autre, en permettant le stockage et dans lesquels des moyens d'analyse permettent, par lecture appropriée du support, de sélectionner une zone de carte à visualiser sous forme de signaux vidéo aptes à la visualisation envisagée sur un indicateur cathodique.

De manière plus précise, les perfectionnements objet de l'invention concernent les dispositifs du type indicateur cartographique dans lesquels l'image est visualisée en couleur.

Les dispositifs cartographiques présentant l'image d'une carte géographique aux pilotes de certains véhicules sont de plus en plus utilisés, en particulier dans le domaine aéronautique.

L'invention s'applique plus particulièrement dans ce domaine à la réalisation d'un ensemble indicateur électronique de navigation aérienne. Un indicateur cartographique est destiné principalement à présenter au pilote de l'avion la carte géographique de la zone survolée. La zone visualisée défile en correspondance avec le vol et son positionnement est commandé en fonction de la longitude et de la latitude de l'avion et éventuellement de son cap. Les données de latitude, longitude et cap sont fournies par le système de navigation de l'avion (capteurs, centrales à inertie, etc...). Outre la carte géographique, le système est agencé pour visualiser conjointement sur le tube cathodique un repère qui indique le point figuratif de l'avion ainsi que des informations, de navigation, par exemple la vitesse, la consommation de carburant, la route à suivre, etc... Ces informations sont fréquemment produites selon un mode de balayage aléatoire, dit cavalier, du tube cathodique pour former les symboles (vecteurs, cercles, etc.) ou les caractères alpha-numériques à visualiser.

Parmi les réalisations connues de ce genre figurent celles qui sont décrites dans la demande de brevet français n° 2 357 022, en particulier la solution suivant laquelle les moyens d'analyse procèdent à une lecture point par point d'un film (noir et blanc ou en couleur) avec un tube analyseur indirect à spot mobile, communément appelé flying-spot selon la technologie anglo-saxonne.

Pour parer au maximum de besoins, la carte géographique disponible à bord du véhicule doit être la plus complète possible. Mais, lors de l'exécution d'une mission particulière, il n'est souvent pas utile de conserver l'ensemble de la carte, et même, il est souhaitable que seulement certains détails soient présentés. Il est ainsi possible d'éviter la confusion de figures et la surcharge visuelle du pilote, et augmenter la rapidité d'intervention. Enfin, l'apparition de figures simplifiées plus explicites permet, par exemple, le recalage de navigation d'une façon plus aisée.

Les cartes géographiques sont généralement en couleurs et la couleur est une manière de coder les différents types de détails indiqués : les routes en rouge, les bois en vert, l'hydrographie en bleu, etc... Le but principal de l'invention est de pouvoir extraire une ou plusieurs couleurs d'une image de carte à l'aide d'un dispositif électronique de façon à pouvoir présenter sur le tube cathodique de visualisation uniquement les détails souhaités, pour avoir une image simplifiée et mieux adaptée à un travail particulier, ou bien une carte dont on a enlevé certains détails.

Il est connu par le brevet US 4 007 327 un mode de traitement numérique de données stockées en mémoire et représentant la luminance et/ou la couleur d'une image à visualiser sur un tube cathodique. Ce traitement a pour but de permettre une analyse précise de l'image, en procédant par comparaison à une référence pour définir le signal de visualisation ; cette solution ne répond pas au problème d'extraction de couleur précité.

Une autre particularité de l'invention est de permettre d'établir une visualisation de carte en couleurs standard à partir de documents hétéroclites c'est-à-dire dont les couleurs peuvent être différentes par suite notamment de diverses impressions ou origines.

A la sortie de l'analyseur, la carte géographique sélectionnée se trouve codée par trois signaux vidéo correspondant au rouge, au vert et au bleu. La solution proposée consiste à analyser en temps réel les signaux portés simultanément par ces trois voies et à identifier la couleur du point soumis à analyse. Grâce à un dispositif logique il est décidé en fonction des critères de sélection retenus d'afficher ou non le point en question ou d'en modifier sa couleur. La solution est réalisable sous forme d'un matériel opérationnel relativement simple compte tenu du nombre limité de couleurs distinctes apparaissant sur une carte géographique imprimée.

Suivant encore une autre particularité de l'invention, l'analyse de la carte et la visualisation peuvent être effectuées à des cadences différentes, ce qui peut être intéressant pour permettre notamment une lecture relativement lente d'un film optique sur lequel est stockée la carte géographique.

Selon un mode de réalisation de l'invention telle que revendiquée, il est proposé un circuit de traitement vidéo intercalé sur les connexions des trois voies vidéo allant du dispositif d'analyse au dispositif de visualisation, le circuit de traitement groupant : des moyens de codage des signaux de voie en un premier mot binaire d'identification de la couleur du point analysé, des moyens de sélection transformant ce premier mot en un deuxième mot binaire correspondant à l'affichage couleur dudit point déterminé en fonction d'un ordre de sélection, et des moyens de décodage du deuxième mot pour reformer de manière inverse au codage les trois voies vidéo d'alimentation du dispositif de visualisation cathodique. Complémentairement, une mémoire d'images peut être interposée entre les moyens de sélection et ceux de décodage pour différencier la cadence d'analyse de celle de visualisation.

Les particularités et avantages de l'invention apparaîtront dans la description qui suit, donnée à titre d'exemple non limitatif à l'aide des figures annexées qui représentent :

la figure 1, un diagramme général d'un dispositif indicateur cartographique aménagé conformément à l'invention ;

la figure 2, un diagramme détaillé d'un dispositif selon la figure 1 ;

la figure 3, un schéma partiel montrant un exemple de réalisation des circuits de codage et de décodage utilisés ;

la figure 4, un schéma relatif à une application à un indicateur électronique de navigation aérienne.

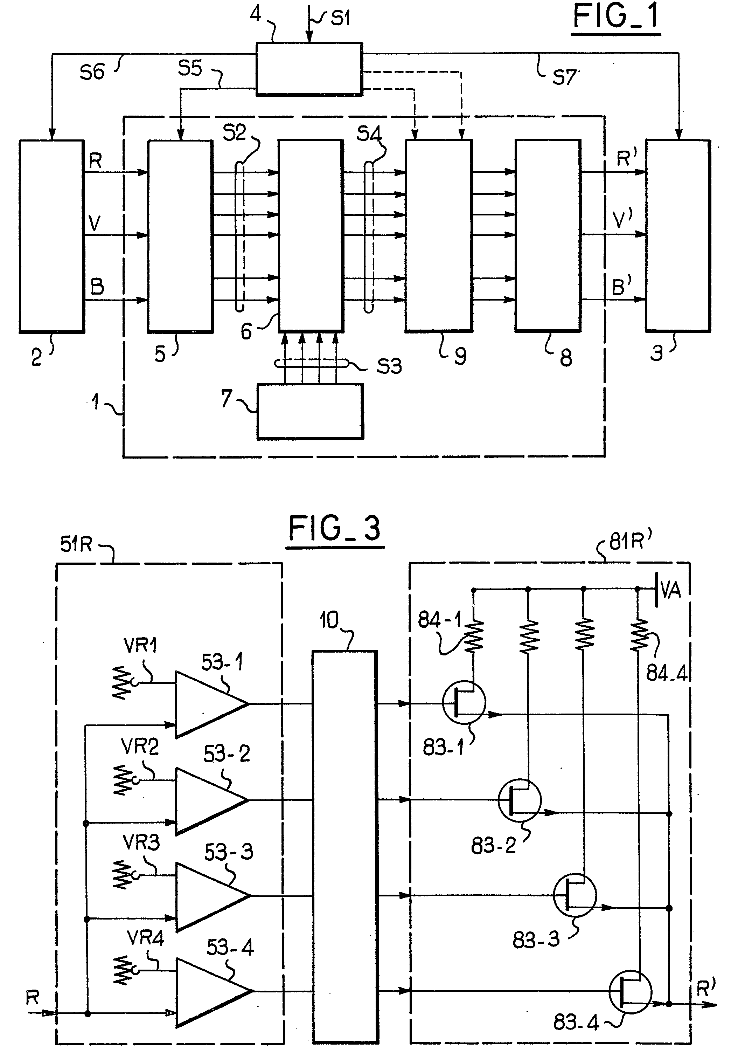

Suivant le diagramme général de la figure 1, les aménagements apportés à un dispositif indicateur cartographique comportent un circuit particulier de traitement vidéo 1 disposé entre le dispositif d'analyse 2 délivrant les trois voies vidéo couleur, référencées respectivement R pour le rouge, V pour le vert et B pour le bleu, et le dispositif de visualisation 3 groupant un tube cathodique et ses circuits associés. Le bloc 4 représente des moyens de commande et de synchronisation normalement prévus pour contrôler l'analyseur 2 et la visualisation 3 en fonction de données extérieures reçues et symbolisées par S1, et qui assure également le contrôle dans le temps du circuit de traitement 1.

Le circuit 1 élabore à partir des signaux R, V, B de nouveaux signaux R', V', B', qui tiennent notamment compte de la sélection de couleur envisagée.

A un instant considéré, les signaux vidéo R, V, B représentent respectivement les niveaux de rouge, de vert et de bleu du point de la carte stockée analysé à cet instant. Des moyens de codage 5 assurent l'identification de la couleur correspondante de ce point en élaborant un mot binaire S2 et $n$ bits composé de $m$ bits pour traduire la chrominance qui revient à identifier la couleur proprement dite du point analysé, et de $p$ bits traduisant la luminance c'est-à-dire l'intensité dans cette teinte. Des moyens de sélection 6 reçoivent le mot S2 et un deuxième mot binaire S3 correspondant à un signal d'ordre de sélection élaboré par un générateur d'ordre 7, ils délivrent un mot S4 correspondant à la couleur à afficher pour le point considéré en tenant compte de l'ordre de sélection S3. Le mot S4 est ensuite traité par des moyens de décodage 8 qui réalisent sensiblement la fonction inverse des moyens 5 pour reproduire trois signaux vidéo R', V', B' correspondant à l'affichage sélectionné.

Le bloc 9 représente une mémoire, de préférence non volatile, qui peut être insérée dans la chaîne pour stocker l'image point par point et autoriser des cadences différentes pour la visualisation d'image et l'analyse différentes pour la visualisation d'image et l'analyse. Dans le cas par exemple d'un balayage ligne par ligne type télévision, la visualisation s'effectue normalement à 25 images/seconde tandis que l'analyse pourra être produite à une cadence beaucoup plus faible. La mémoire 9 est commandée à l'écriture et à la lecture par les moyens de commande et de synchronisation 4.

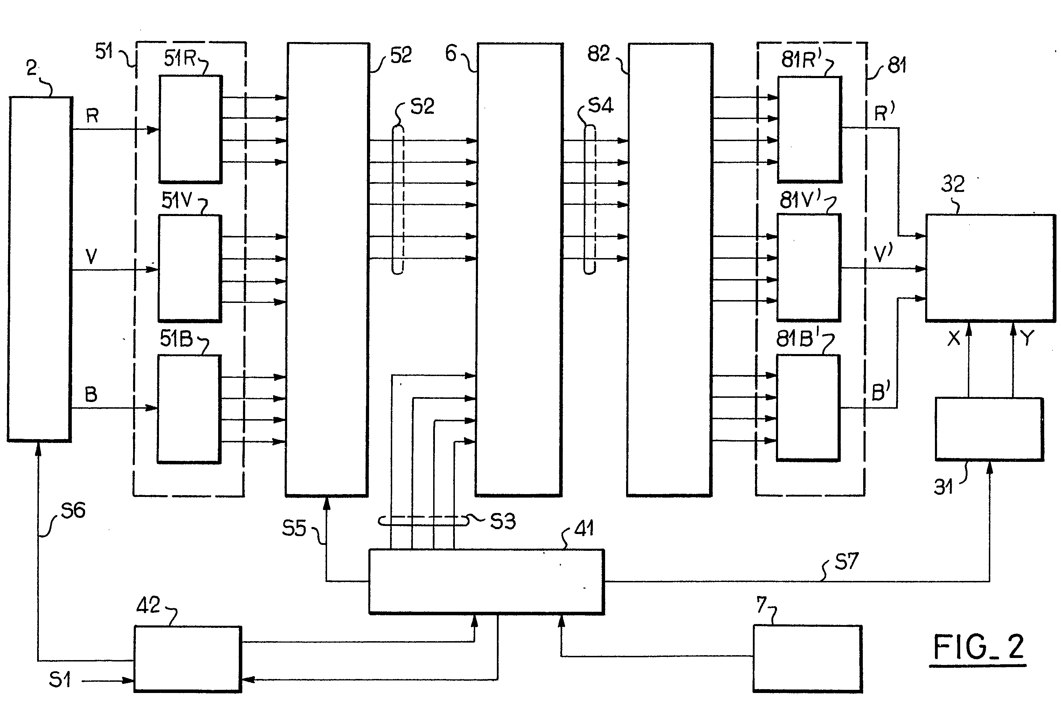

Le fonctionnement du dispositif indicateur cartographique apparaîtra plus clairement dans l'exposé qui suit en liaison avec la représentation plus détaillée de la figure 2.

Comme il a été indiqué dans le préambule, un document tel qu'une carte géographique se trouve représenté en utilisant un nombre assez limité de couleurs distinctes. Soit N ce nombre qui peut par exemple avoir une valeur voisine de dix. Par couleurs distinctes on entend aussi bien des couleurs nettement différentes telles qu'un tracé jaune et un autre en rouge, et celles qui dérivent d'une même couleur mais se distinguent par la nuance ou la teinte, par exemple une gamme de bleus entre un bleu clair et un bleu foncé. En fait tous les points d'une même couleur ou d'une même teinte sont identiques des points de vue chrominance. Il en résulte que les signaux vidéo, R, V, B en sortie de l'analyseur vont également consister en N configurations R, V, B correspondant à une couleur ou teinte analysée.

L'identification de couleur du point analysé est réalisée par les moyens de codage 5 qui comportent pour chaque voie un circuit 51R, V ou B, qui effectue la conversion sous forme numérique du signal vidéo analogique correspondant. Sur l'exemple figuré le signal de voie est transformé en un mot de quatre bits qui traduit seize niveaux possibles de luminance dans le rouge, ou le vert, ou le bleu, pour le point analysé. La configuration R, V, B présente à l'entrée est ainsi traduite en un mot de douze bits à l'entrée d'un second circuit 52 constitué de préférence par une mémoire morte préprogrammée, dite PROM.

La programmation de la mémoire s'effectue en tenant compte des N mots de douze bits distincts à reconnaître en correspondance avec les N configurations R, V, B possibles, et à faire correspondre à chacun d'eux un mot S2 délivré en sortie. Le mot S2 comporte par exemple quatre bits pour identifier la chrominance du point analysé et deux bits pour fournir une information de luminance pour la représentation cathodique. La mémoire PROM 52 agit en fait comme une table de tri qui fait correspondre à un mot d'entrée de douze bits un mot prédéterminé parmi les N prévus en sortie.

Le mot d'ordre S3, par exemple de quatre bits, est appliqué au circuit de sélection 6 conjointement avec le mot d'identification 6 conjointement avec le mot d'identification S2. Le mot d'ordre S3 résulte de la sélection choisie par l'opérateur, il peut être élaboré directement par le circuit générateur 7 qui comportera à cet effet une commande manuelle à plusieurs positions, chaque position correspondant à un mode de sélection différent, et un circuit précâblé qui fournira les valeurs de bits 0 ou 1 sur les quatre sorties formant S3. A titre d'exemple, la série 0000 peut correspondre à la commande représentation complète de la carte sans sélection de couleur, la série 0101 à la position sélection de rouge pour faire apparaître les routes etc... Dans la version représentée les mots S3 sont stockés dans un circuit de gestion 41 qui reçoit une sortie analogique du circuit 7 qui joue le rôle de circuit de commande.

Le circuit 6 peut être également constitué par une deuxième mémoire PROM programmée en sorte de délivrer un mot S4 qui tient compte de la sélection choisie parmi les diverses sélections prévues. Ainsi dans le cas de sélection du rouge seul précité, lorsque le mot S2 identifie un point rouge analysé le circuit 6 délivre également un mot S4 en sortie correspondant à l'affichage d'un point rouge sur l'indicateur de visualisation, et lorsque le mot S2 identifie un point de couleur différente du rouge pour le point analysé le mot S4 délivré en sortie correspondra à une absence d'affichage pour ce point c'est-à-dire son remplacement sur l'écran par un point noir. La programmation de la mémoire 6 et le nombre de mots stockés tient compte des diverses situations possibles résultant des sélections envisagées. Le mot S4 en sortie peut comporter comme S2, quatre bits de chrominance et deux bits de luminance. Parmi les diverses situations possibles il peut être remarqué que la sélection d'une couleur ou teinte du document analysé n'impose pas du fait de la présence du circuit 6 l'affichage des points correspondants dans une même couleur ; il peut être prévu une sélection du rouge avec un affichage dans une autre teinte, en violet par exemple. Le nombre de bits du mot S3 est déterminé en fonction du nombre de sélections diverses envisagées.

Les moyens de décodage 8 comportent de manière inverse au codage, une troisième mémoire PROM 82 qui fait correspondre au mot S4 trois mots de quatre bits correspondant aux taux respectifs de rouge, de vert et de bleu dans le point à afficher, et trois circuits de conversions 81R′, V′ et B′ sous forme analogique pour délivrer les signaux R′, V′ et B′ destinés à l'indicateur cathodique 32.

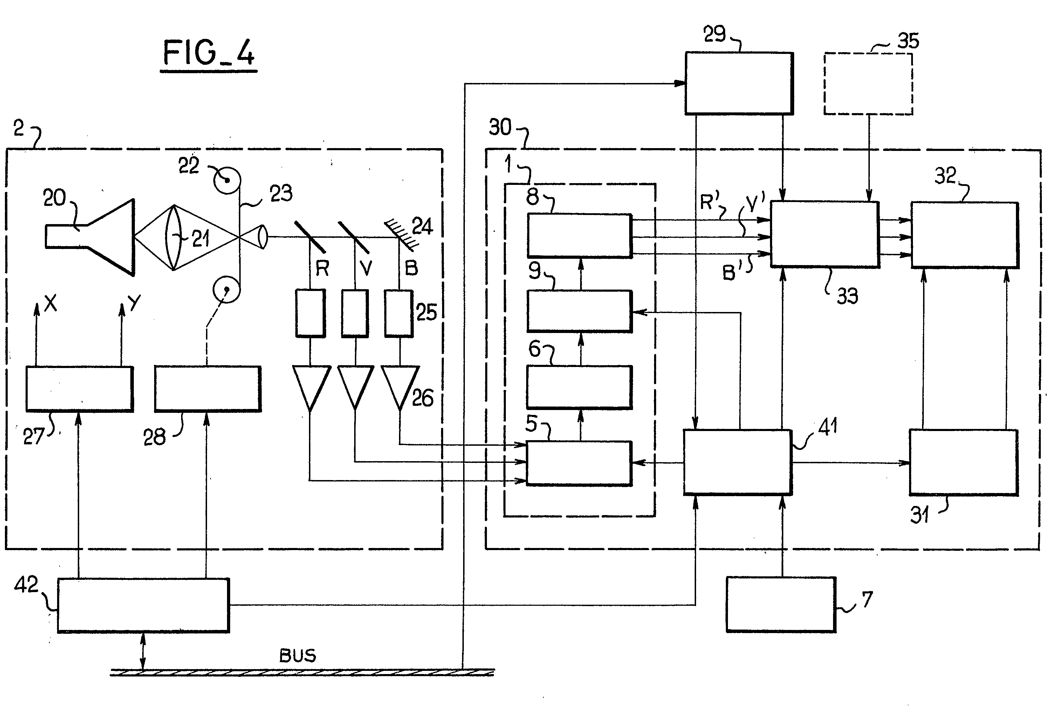

Les moyens de commande et de synchronisation peuvent consister en un microprocesseur 42 et un circuit de gestion 41 compte tenu que la partie analyseur 2 peut être éloignée du reste (coffret indicateur 30, figure 4). Le circuit 31 symbolique le circuit de balayage du tube. Les signaux R, V, B, sont échantillonés régulièrement pour constituer les points successifs sur application d'un signal d'horloge S5 correspondant au circuit mémoire S2. La liaison S6 commande l'analyseur, par exemple le balayage d'un tube flying-spot (figure 4), et la liaison S7 commande le balayage de l'indicateur cathodique.

La figure 3 se rapporte à un mode de réalisation des circuits de codage et de décodage. Chaque voie vidéo attaque en parallèle des comparateurs à sortie numérique et dont le niveau de référence $V_R$ est ajusté différemment pour quantifier l'amplitude du signal analogique reçu. Ainsi le circuit 51R représenté de manière simplifiée avec quatre comparateurs à seuil 53-1 à 53-4, permet de coder cinq niveaux de rouge grâce à des valeurs progressives des seuils VR1 à VR4. Dans une application réelle, chaque circuit 51 sera déterminé pour distinguer seize niveaux et les coder selon un mot de quatre bits. Chaque couleur analysée sera ainsi traduite en trois mots de quatre bits en sorte des circuits 51R, V et B.

Si les documents d'origine sont hétéroclites du point de vue des couleurs utilisées pour leur impression, l'ajustage des différents seuils permet de retrouver le même codage binaire pour indiquer la même information d'origine. De cette manière, la couleur d'affichage de cette information sur l'indicateur est inchangée quel que soit le document d'origine, il est produit une présentation avec des couleurs standardisées.

Le bloc 10 symbolique les circuits de traitement entre les circuits de codage 51 et les circuits de décodage 81 dont on a également représenté l'un d'eux, le circuit 81R′. La restitution de la composante analogique de rouge R′ à afficher peut être obtenue au moyen de transistors à effet de champ 83-1 à 83-4 à partir des quatre sorties numériques correspondantes issues du circuit 82 (figure 2). Selon l'état 0 ou 1 de ces sorties seize niveaux différents peuvent être produits à la sortie R′ connectée à une tension d'alimentation VA à travers les transistors 83 et un réseau de résistances 84-1 à 84-4. A chacune des N configurations R, V, B d'entrée correspond une configuration R′, V′, B′ prédéterminée qui n'est pas forcément strictement la même, c'est-à-dire que la couleur d'affichage pourra différer de celle d'entrée selon les critères de standardisation retenus pour la représentation.

La figure 4 représente le dispositif indicateur cartographique intégré dans un équipement de bord plus complet en vue de réaliser un ensemble indicateur électronique de navigation. Un coffret d'analyse 2 du type flying-spot comporte : un tube cathodique d'analyse 20 sur lequel on affiche une image blanche, une optique 21 servant à former l'image de la face du tube sur la portion de film à analyser, un dispositif support de film 22 avec le film 23, un séparateur trichrome 24, trois photomultiplicateurs 25 recevant respectivement les trois signaux rouge, vert et bleu, des amplificateurs vidéo 26 sur les trois voies de sortie, un circuit 27 générateur des tensions de balayage du tube 20, un circuit 28 d'asservissement de position du film, un circuit de commande et de synchronisation 42. Le signal vidéo trichrome est transmis à un coffret indicateur 30 qui reçoit par ailleurs une vidéo synthétique élaborée par un générateur de symboles 29. Le circuit 33, du type mélangeur ou autre, permet de combiner la vidéo de carte avec la vidéo de symboles. Une structure de ce genre est connue et décrite notamment dans la demande de brevet français n° 2 357 022. Conformément à la présente invention, la vidéo R, B, V est traitée dans le circuit 1 avant d'être transmise à l'indicateur cathodique 32. Le bloc 35 symbolise un générateur vidéo annexe, par exemple un radar de bord. Le pilote par action sur les commandes du coffret 7 choisit le mode de sélection de couleur qui l'intéresse ; par ailleurs, il peut commander la visualisation radar à la place de celle de carte, la sélection vidéo s'effectuant en 33.

Le dispositif indicateur décrit dans ce qui précède permet de reconnaître les N couleurs de base qui entrent dans l'impression d'un document à visualiser, tel une carte géographique. La terminologie indicateur cartographique est par suite à interpréter dans un sens général et non de manière exhaustive. Chaque signal rouge, vert et bleu attaque un codeur suivi d'une logique rapide qui commande soit l'affichage dupoint analysé, soit une couleur de remplacement.

Le circuit de traitement vidéo 1 permet de faire correspondre à une couleur analysée (un mot logique à l'entrée), une couleur quelconque synthétisée par réglage des composantes de chaque couleur de base. On peut ainsi reconstituer, pour une couleur donnée à l'entrée, une couleur quelconque qui lui correspond à la sortie.

Il devient ainsi possible de présenter sur le tube de visualisation, une image qui représente l'image initiale, mais dont les couleurs peuvent en être différentes. Trois résultats peuvent être ainsi obtenus : si les documents de base sont hétéroclites du point de vue des couleurs utilisées pour leur impression (cartes de provenances différentes, cartes étrangères, etc...), les couleurs de présentation demeurent toujours identiques ; pour reproduire la carte, on peut utiliser un film dont le rendu chromatique peut être modifié de façon à obtenir un bon codage de couleur, c'est-à-dire, qui se prête à une distinction facile des couleurs (composantes chromatiques très différentes d'une couleur à l'autre) ; enfin il est possible d'adapter les couleurs de présentation indépendamment du système de film et d'analyse, et rendre ainsi la vision de l'image plus confortable et plus agréable, permettant de diminuer la fatigue des opérateurs, et d'augmenter leur efficacité en diminuant le taux d'erreur.

**Revendications**

1. Dispositif du type indicateur cartographique suivant lequel le document à visualiser est formé par un nombre limité de couleurs et dans lequel, un dispositif d'analyse (2) élabore trois voies de signaux vidéo alimentant un dispositif de visualisation cathodique (3) en couleurs, caractérisé en ce que les trois voies vidéo sont traitées par l'intermédiaire d'un circuit de traitement (1) groupant : des moyens de codage des signaux de voie (R, V, B) en un premier mot binaire (S2) d'identification de la couleur du point analysé, des moyens de sélection (6) transformant ce premier mot en un deuxième mot binaire (S4) correspondant à l'affichage couleur dudit point déterminé en fonction d'un ordre de sélection (S3) reçu, un circuit générateur (7) d'ordre de sélection, et des moyens de décodage (8) du deuxième mot pour reformer de manière inverse au codage les trois voies vidéo d'alimentation (R', V', B') du dispositif de visualisation cathodique.

2. Dispositif selon la revendication 1, caractérisé en ce que les moyens de codage comportent un ensemble (51) de trois circuits de conversion (51R, V, B) alimentés respectivement par les trois voies vidéo, rouge, vert et bleu, et effectuant une conversion binaire du niveau vidéo incident selon un codage prédéterminé, et une première mémoire morte programmée (52) pour faire correspondre aux trois mots binaires résultant de la conversion le mot d'identification de couleur du point analysé constituant le dit premier mot binaire ; en ce que les moyens de sélection (6) sont constitués par une deuxième mémoire morte programmée recevant le premier mot binaire (S2) et le mot d'ordre (S3) choisi et délivrant le deuxième mot binaire ; et en ce que les moyens de décodage comportent une troisième mémoire morte programmée (82) pour retransformer le deuxième mot binaire en trois mots correspondant au rouge, au vert et au bleu à afficher et un ensemble (81) de trois circuits (81R', V', B') pour reformer les trois voies vidéo (R', V', B') alimentant l'indicateur cathodique (32).

3. Dispositif selon la revendication 2, caractérisé en ce que les moyens de codage (51R, V, B) comportent des comparateurs à seuil réglable (VR) et les circuits de décodage (81R', V', B') comportent des transistors à effet de champ (83) pour commuter une tension d'alimentation (VA) à travers un réseau de résistances (84).

4. Dispositif selon l'une quelconque des revendications 1 à 3, comportant des moyens annexes de commande et de synchronisation (4) de l'analyseur et de la visualisation et dans lequel les trois voies vidéo analysées sont des signaux analogiques, caractérisé en ce que les moyens de commande et de synchronisation produisent un signal d'horloge (S5) pour synchroniser les moyens de codage (5) à la cadence point.

5. Dispositif selon l'une quelconque des revendications 1 à 4, caractérisé en ce que le circuit de traitement comporte complémentairement une mémoire d'images (9) interposée entre les moyens de sélection et ceux de décodage.

6. Dispositif selon les revendications 4 et 5, et dans lequel le dispositif d'analyse est du type flying-spot, caractérisé en ce que la mémoire d'image est commandée à l'écriture et à la lecture par les moyens de commande et de synchronisation (4) en sorte de produire l'analyse d'image à une cadence réglable et pouvant être notablement inférieure à celle de la visualisation cathodique.

7. Indicateur électronique de navigation aérienne, utilisant un dispositif indicateur cartographique selon l'une quelconque des revendications 1 à 6, caractérisé en ce que les sorties vidéo du circuit de traitement (1) sont appliquées à un circuit de superposition et de sélection (33) recevant par ailleurs une vidéo synthétique de symboles d'un générateur de symboles (29) et une vidéo radar d'un système radar (35), et permettant sur commande de l'opérateur de superposer la vidéo de carte ou radar avec une vidéo de symboles et de sélectionner la vidéo de carte ou la vidéo radar pour l'affichage cathodique.

**Claims**

1. A cartographic indicator device for displaying a document formed by a limited number of colours, comprising an analyser device (2) providing the three video signal channels for a colour cathode ray tube display device (, characterized in that the three video channels are treated by means of a processing circuit (1) comprising means for coding the signals of the channels (R, V, B) in a first binary word (2) identifying the colour of the analyzed point, selection means (6) transforming this first word into a second binary word (S4) corresponding to the colour display of the given point as a function of a selection instruction (S3) received, a circuit (7) for generating the selection instruction and means (8) for decoding the second word to re-form in the opposite manner to the coding operation, the three video channels (R', V', B') for supply to the said display device.

2. A device according to claim 1, characterized in that the coding means comprise a group (51), of three conversion circuits (51R, V, B) respectively supplied by the three video channels red, green and blue, and performing a binary conversion of the incident video level in accordance with a predetermined code, and a first programmed read-only memory (52) for bringing about correspondence of the colour identification word of the analyzed point constituting the said first binary word with the three binary words resulting from the conversion, in that the selection means (6) are constituted by a second programmed read-only memory receiving the first binary word (S2) and the selected instruction word (S3) and supplying the second binary word, and in that the decoding means comprise a third programmed read-only memory (82) for retransforming the second binary word into three words corresponding to red, green and blue to be displayed and a group (81) of three circuits (81R', V', B') for re-forming the three video channels (R', V', B') supplying the said display device (32).

3. A device according to claim 2, characterized in that the coding means (51R, V, B) comprise threshold comparators (53) with a digital output and a regulatable threshold (VR), and the decoding circuits (81R', V', B') comprise field effect transistors (83) for switching a supply voltage (VA) across a network of resistors (84).

4. A device according to any one of the claims 1 to 3, comprising ancillary control and synchronization means (4) for the analyser and the display device and in which the three video channels analysed are analog signals, characterized in that the control and synchronization means produce a clock signal (S5) for synchronizing the coding means (5) at the point frequency.

5. A device according to any one of the claims 1 to 4, characterized in that the processing circuit also comprises an image memory (9) interposed between the selection means and the decoding means.

6. A device according to claims 4 and 5, in which the analyser device is of the flying spot type, characterized in that the image memory is controlled on writing and reading by the control and synchronization means (4) so as to produce the image analysis at a regultatable frequency which can be significantly below that of the cathode display.

7. An electronic indicator for aircraft navigation utilizing a cartographic indicator device according to any one of the claims 1 to 6, characterized in that the video outputs of the processing circuit (1) are applied to a superimposing and selection circuit (33) which also receives a synthetic video of symbols from a symbol generator (29) and a radar video from a radar system (35) and which, under the control of the video with a symbol video and to select the map video or the radar video for the cathode display.

**Ansprüche**

1. Kartographische Anzeigevorrichtung, bei der das sichtbar zu machenden Dokument aus einer begrenzten Anzahl von Farben gebildet wird und bei der eine Analysevorrichtung (2) drei Bildsignalkanäle ausbildet, die eine eine Farbbildröhre enthaltende Sichtbarmachungsvorrichtung (3) speisen, dadurch gekennzeichnet, daß die drei Bildsignalkanäle über einen Verarbeitungsschaltkreis behandelt werden, der Mittel zur Kodierung der Kanalsignale (R, V, B) in ein erste Binärwort (S2) zur Identifizierung der Farbe des analysierten Punktes, Auswahlmittel (6), die dieses erste Wort in ein zweites Binärwort (S4) entsprechend der Farbangabe des bestimmten Punktes abhängig von einem empfangenen Auswahlbefehl (S3) umwandeln, einen Schaltkreis (7) zur Erzeugung des Auswahlbefehls und Dekodiermittel (8) für dieses zweite Wort enthält, durch die die drei Bildsignalkanäle (R', V', B') der Sichtbarmachungsvorrichtung in zur Kodierung entgegengesetzter Weise wieder gebildet werden.

2. Vorrichtung nach Anspruch 1, dadurch gekennzeichnet, daß die Mittel zur Kodierung eine Gruppe (51) von drei Umwandlungsschaltkreisen (51R, V, B), die je von einem der drei Bildsignalkanäle rot, grün und blau gespeist werden und eine binäre Umwandlung des ankommenden Bildpegels gemäß einer vorgegebenen Kodierung durchführen, sowie einen ersten Festspeicher (52) aufweisen, der so programmiert ist, daß den drei sich bei der Umwandlung ergebenden Binärwörtern das das erste Binärwort bildende Farbidentifizierwort des analysierten Punktes entspricht, daß die Auswahlmittel (6) aus einem zweiten programmierten Festspeicher bestehen, dem das erste Binärwort (S2) und das gewählte Befehlswort (S3) zugeführt werden und der das zweite Binärwort liefert, und daß die Dekodiermittel einen dritten Festspeicher (82), der so programmiert ist, daß das zweite Binärwort wieder in drei den drei anzuzeigenden Farben rot, grün und blau entsprechende Wörter umgewandelt wird, und eine Gruppe (81) von drei Schaltkreisen (81R', V', B') enthalten, die die drei Bildkanäle (R', V', B') zur Speisung der Farbbildröhre (32) wiederherstellen.

3. Vorrichtung nach Anspruch 2, dadurch gekennzeichnet, daß die Kodiermittel (51R, V, B) Schwellenkomparatoren (53) mit digitalem Ausgang und regulierbarer Schwelle (VR) und die Dekodiermittel (81R', V', B') Feldeffekt-Transistoren (83) aufweisen, um eine Speisespannung (VA) über ein Widerstandsnetz (84) umzuschalten.

4. Vorrichtung nach einem beliebigen der Ansprüche 1 bis 3, die zugehörige Steuer- und Synchronisiermittel (4) für den Analysierer und die Sichtbarmachung aufweist, und in der die drei analysierten Bildsignalkanäle Analogsignale sind, dadurch gekennzeichnet, daß die Steuer- und Synchronisiermittel ein Taksignal (S5) erzeugen, um die Kodiermittel (5) mit der Punktfolgefrequenz zu synchronisieren.

5. Vorrichtung nach einem beliebigen der Ansprüche 1 bis 4, dadurch gekennzeichnet, daß der Verarbeitungsschaltkreis ergänzend einen Bildspeicher (9) aufweist, der zwischen den Auswahlmitteln und den Dekodiermitteln angeordnet ist.

6. Vorrichtung nach den Ansprüchen 4 und 5, in der die Analysiervorrichtung vom Typ « flying spot » ist, dadurch gekennzeichnet, daß der Bildspeicher von den Steuer- und Synchronisiermitteln (4) zum Schreiben und Lesen so gesteuert wird, daß er die Bildanalyse bei einer regelbaren Frequenz liefert, die wesentlich niedriger als die Frequenz der kathodischen Sichtbarmachung sein kann.

7. Elektronischer Anzeiger für die Luftfahrt, der eine kartographische Anzeigevorrichtung gemäß einem der Ansprüche 1 bis 6 verwendet, dadurch gekennzeichnet, daß die Bildsignalausgänge des Verarbeitungsschaltkreises (1) an einen Überlagerungs- und Auswahlschaltkreis (33) angelegt werden, der außerdem von einem Symbolgenerator (29) ein synthetisches Symbolbildsignal und von einem Radarsystem (35) ein Radarbildsignal empfängt und aufgrund der Steuerung durch die Bedienungsperson die Überlagerung des Karten- oder Radarbildsignals mit einem Symbolbildsignal und die Auswahl des Kartenbildsignals oder des Radarbildsignals für die kathodische Anzeige ermöglicht.

FIG_1

FIG_3

FIG_2

0 023 861

# FIG_4

BUS

0 023 861